(19) Europäisches Patentamt
European Patent Office
Office européen des brevets

(11) **EP 3 963 293 B1**

(12) **EUROPÄISCHE PATENTSCHRIFT**

(45) Veröffentlichungstag und Bekanntmachung des Hinweises auf die Patenterteilung:
**01.11.2023   Patentblatt 2023/44**

(21) Anmeldenummer: **20715866.8**

(22) Anmeldetag: **31.03.2020**

(51) Internationale Patentklassifikation (IPC):
**G01F 1/74** *(2006.01)*        **G01F 15/02** *(2006.01)*
**G01N 9/00** *(2006.01)*        **G01N 11/16** *(2006.01)*
**G01F 1/84** *(2006.01)*

(52) Gemeinsame Patentklassifikation (CPC):
**G01F 1/8436; G01F 1/74; G01N 9/002;**
**G01N 11/16;** G01F 1/8477; G01F 15/02;
G01N 2009/006

(86) Internationale Anmeldenummer:
**PCT/EP2020/059050**

(87) Internationale Veröffentlichungsnummer:
**WO 2020/221534 (05.11.2020 Gazette 2020/45)**

(54) **MESSGERÄT ZUM CHARAKTERISIEREN EINES INHOMOGENEN, FLIESSFÄHIGEN MEDIUMS**

MEASURING DEVICE FOR CHARACTERIZING A NON-HOMOGENEOUS, FLOWABLE MEDIUM

APPAREIL DE MESURE DE CARACTÉRISATION D'UN MILIEU COULANT NON HOMOGÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2019   DE 102019003075**

(43) Veröffentlichungstag der Anmeldung:
**09.03.2022   Patentblatt 2022/10**

(73) Patentinhaber: **Endress+Hauser Process Solutions AG**
**4153 Reinach (CH)**

(72) Erfinder:
• **ZHU, Hao**
**85354 Freising (DE)**
• **RIEDER, Alfred**
**84032 Landshut (DE)**
• **LIN, Yaoying**
**85356 Freising (DE)**

(74) Vertreter: **Hahn, Christian et al**
**Endress+Hauser Group Services (Deutschland)AG +Co. KG**
**Colmarer Straße 6**
**79576 Weil am Rhein (DE)**

(56) Entgegenhaltungen:
WO-A1-2008/136825        DE-A1-102015 104 931
DE-A1-102016 114 972     JP-A- 2011 089 774
US-A1- 2010 281 998      US-B2- 8 151 653
US-B2- 9 395 236

**Beschreibung**

Die vorliegende Erfindung betrifft ein Messgerät zum Charakterisieren eines inhomogenen, fließfähigen Mediums, insbesondere zum Bestimmen der Dichte, des Massedurchflusses und/oder der Viskosität eines inhomogenen fließfähigen Mediums und zum Charakterisieren der Inhomogenität des Mediums, wobei das Messgerät mindestens einen Oszillator aufweist, der mit dem Medium beaufschlagbar ist, und der mindestens eine Schwingungsmode aufweist, deren Eigenfrequenz von der Dichte $\rho$ des Mediums abhängt. Ein solcher Oszillator kann ein einziges, schwingfähiges Messrohr oder ein Paar bzw. mehrere Paare von schwingfähigen Messrohren zum Führen des Mediums umfassen.

Mehrphasige Medien, können große Inhomogenitäten aufweisen, insbesondere mit Gas beladene Flüssigkeiten, wenn das Gas nicht in Form von Mikroblasen in der flüssigen Phase gelöst ist, sondern in Form von freien Blasen in der flüssigen Phase vorkommt. Das Vorkommen freier Blasen kann eine wesentliche Eigenschaft des Mediums sein, die qualitativ und/oder quantitativ festzustellen ggf. von großem Interesse ist. Aus der Perspektive eines von einem inhomogenen Medium durchströmten Messgeräts treten die Inhomogenitäten als Dichtefluktuationen d$\rho$/dt in Erscheinung. Letztere bewirken Fluktuationen der Schwingungsfrequenz df/dt des Oszillators, welche mit der Dichtefluktuation d$\rho$/dt korrelieren. Die Analyse der Fluktuationen der Schwingungsfrequenz df/dt des Oszillators bietet demnach einen Ansatz zur Analyse der Dichtefluktuationen und damit ein Indiz für den Grad der Inhomogenität des Mediums. Aspekte zur Interpretation der Frequenzfluktuation, insbesondere zur Vergleichbarkeit der Daten von verschiedenen Messaufnehmern sind in der noch unveröffentlichten Patentanmeldung DE 10 2018 112 002.8 beschrieben. Das Dokument US 8 151 653 B2 offenbart ein Messgerät, wobei ein Medienzustandswert durch das Bestimmen der Fluktuationen der Eigenfrequenz eines Oszillators erfasst wird. Die vorliegende Erfindung betrifft zunächst einen anderen Aspekt zur Interpretation von Frequenzfluktuationen.

Eine inhomogene Dichteverteilung in einem Medium ist zunächst ein räumliches Phänomen, das erst durch das Vorbeiströmen des Mediums an einem Beobachtungsort als zeitliches Phänomen beobachtbar ist. Es ist daher die Aufgabe der vorliegenden Erfindung, ein Messgerät bereitzustellen, welches diesem Phänomen bei der Interpretation von Frequenzfluktuationen Rechnung trägt.

Die Aufgabe wird erfindungsgemäß gelöst durch das Messgerät gemäß dem unabhängigen Patentanspruch 1.

Das erfindungsgemäße Messgerät zum Charakterisieren eines inhomogenen Mediums umfasst:

einen Oszillator, der mindestens ein schwingfähiges Messrohr zum Führen des Mediums aufweist, und der mindestens eine Schwingungsmode aufweist deren Eigenfrequenz von der Dichte des Mediums abhängt;

einen Erreger zum Anregen der Schwingungsmode; mindestens einen Schwingungssensor zum Erfassen von Schwingungen des Oszillators; und

eine Betriebs- und Auswerteschaltung, die dazu eingerichtet ist, den Erreger mit einem Erregersignal zu beaufschlagen, Signale des Schwingungssensors zu erfassen, anhand der Signale des Schwingungssensors aktuelle Werte der Eigenfrequenz des Oszillators sowie Fluktuationen der Eigenfrequenz zu ermitteln, und eine Medienzustandsmeldung mit einem fluktuationsabhängigen Medienzustandswert zu generieren, welche weiterhin von einem Durchflussmesswert abhängt, der den bei den Fluktuationen herrschenden Durchfluss charakterisiert.

In einer Weiterbildung der Erfindung enthält die Medienzustandsmeldung neben dem Medienzustandswert eine Angabe darüber, in welchem Durchflussregime der Medienzustandswert ermittelt wurde. In einer Ausgestaltung dieser Weiterbildung der Erfindung die Angabe über das Durchflussregime, den Durchflussmesswert oder einen Wertebereich des Durchflussmesswerts umfasst.

In einer Weiterbildung der Erfindung ist der Medienzustandswert mit einer von dem Durchflussmesswert abhängigen Normierungsfunktion normiert.

In einer Weiterbildung der Erfindung ist der Medienzustandswert weiterhin eine Funktion des Durchflussmesswerts ist, mit welcher eine Durchflussratenabhängigkeit der Fluktuationen kompensiert wird.

In einer Weiterbildung der Erfindung umfasst der Durchflussmesswert eine Strömungsgeschwindigkeit, eine Massedurchflussrate, eine Volumendurchflussrate oder eine Reynoldszahl; oder eine Bereichsangabe für die vorgenannten Größen.

In einer Weiterbildung der Erfindung umfasst der Medienzustandswert einen Gasvolumenanteil des Mediums oder einen Wertebereich für den Gasvolumenanteil umfasst.

Angesichts der Vielfalt von verfügbaren gattungsgemäßen Messgerätetypen erfordert es einen großen Aufwand, zu vergleichbaren Feststellungen hinsichtlich des Vorkommens von freien Blasen mit unterschiedlichen Messgerätetypen zu gelangen. Hierzu sind in der Regel Messreihen erforderlich, in denen die Messgeräte jeweils mit Medien beaufschlagt werden, die freie Blasen enthalten, und die beobachtete Frequenzfluktuation des Oszillators wird als Funktion der Konzentration an freien Blasen bzw. als Funktion des Gasvolumenanteils GVF nach dem englischen Gas Void Fraction) erfasst. Anschließend ist ein Algorithmus zu implementieren, der die beobachtete Frequenzfluktuation mit der Inhomogenität des Mediums, insbesondere dessen Gasvolumenanteil in Beziehung setzt.

Um einen Vergleich zwischen Daten von verschiedenen Messgeräten zu erleichtern ist der Medienzustandswert $Z_M$ gemäß einer Weiterbildung der Erfindung eine Funktion der Fluktuationen der Eigenfrequenz, wobei die Funktion weiterhin eine eigenfrequenzabhängige Normierung aufweist. Die bedeutet beispielsweise dass eine erste fluktuationsabhängige Funktion $F_A(df/dt)$ durch eine zweite eigenfrequenzabhängige Funktion $F_B(f)$ geteilt wird, also: $Z_M = F_A(df/dt)/ F_B(f)$. Ein solchermaßen ermittelter Medienzustandswert ist insofern normiert, als er unabhängig von dem jeweils für unterschiedliche Messgeräte spezifischen Eigenfrequenzen einen Vergleich zwischen den Medienzustandswerten ermöglicht, da der Einfluss der Eigenfrequenz auf den Medienzustandswert eliminiert ist.

In einer Ausgestaltung dieser Weiterbildung der Erfindung ist die Funktion proportional ist zur Fluktuation der Eigenfrequenz und zur dritten Potenz des Kehrwerts der Eigenfrequenz.

In einer Ausgestaltung dieser Weiterbildung der Erfindung ist die Funktion weiterhin proportional ist zu einer modalen Steifigkeit des Oszillators bei der zur Eigenfrequenz gehörenden Schwingungsmode des Oszillators. In einer Ausgestaltung dieser Weiterbildung der Erfindung ist die Funktion proportional zur Fluktuation der Eigenfrequenz und zum Kehrwert der Eigenfrequenz.

In einer Weiterbildung der Erfindung weist der Oszillator mindestens ein Paar von schwingfähigen Messrohren zum Führen des Mediums auf.

In einer Weiterbildung der Erfindung weist das Messgerät zwei voneinander unabhängige Oszillatoren mit jeweils einem Paar von Messrohren auf, wobei die beiden Oszillatoren für eine Biegeschwingungsnutzmode jeweils unterschiedliche Nutzmodeeigenfrequenzen aufweisen.

In einer Weiterbildung der Erfindung umfasst der Medienzustandswert einen Index, zum Klassifizieren des Mediums, insbesondere zum Klassifizieren hinsichtlich seiner Gasbeladung.

In einer Weiterbildung der Erfindung ist die Betriebs- und Auswerteschaltung dazu eingerichtet, einem Dichtemesswert, einem Massedurchflussmesswert und/oder einem Viskositätsmesswert eine Bewertung zuzuordnen, die von dem Medienzustandswert abhängt, und beispielsweise auf den Grad der Inhomogenität des Mediums hinweist.

Die Erfindung wird nun anhand der in den Zeichnungen dargestellten Ausführungsbeispiele beschrieben. Es zeigen:

Fig. 1: eine schematische Darstellung eines ersten Ausführungsbeispiels eines erfindungsgemäßen Messgerätes;

Fig. 2: ein Diagramm, welches Frequenzfluktuationen in Abhängigkeit von der Strömungsgeschwindigkeit eines inhomogenen Mediums darstellt; und

Fig. 3: ein Diagramm, welches Frequenzfluktuation in Abhängigkeit von der Strömungsgeschwindigkeit und einer Minoritätskonzentration eines inhomogenen Mediums darstellt.

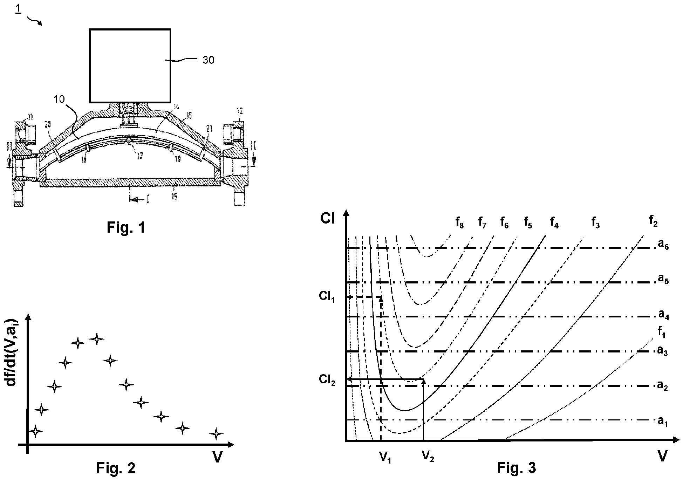

Das in Fig. 1 dargestellte erste Ausführungsbeispiel eines erfindungsgemäßen Messgeräts 1 umfasst einen Oszillator 10 der ein Paar von parallel geführten schwingfähigen Messrohren 14 umfasst, die sich zwischen einem einlassseitigen Flansch 11 und einem auslassseitigen Flansch 12 erstrecken, wobei die Flansche jeweils einen Strömungsteiler bzw. Sammler umfassen, in den die Messrohre 14 münden. Die Strömungsteiler sind durch ein starres Gehäuse 15 miteinander verbunden, so dass Schwingungen der die Messrohre aufnehmenden Strömungsteiler im Bereich von Schwingungsfrequenzen von Biegeschwingungsnutzmoden des Oszillators wirksam unterdrückt sind. Die Messrohre 10 sind mit einer einlassseitigen Knotenplatte 20 und einer auslassseitigen Knotenplatte 21 starr verbunden, wobei die Knotenplatten Schwingungsknoten des durch die beiden der Messrohre 14 gebildeten Oszillators 10 definieren, und damit die Frequenzen der Biegeschwingungsnutzmoden weitgehend festlegen. Der Oszillator 10 wird mit einem zwischen den beiden Messrohren 14 wirkenden elektrodynamischen Erregers 17 zum Schwingen angeregt, wobei die Schwingungen mittels zweier Relativbewegungen der Messrohre 14 zueinander erfassender Schwingungssensoren 18, 19 detektiert werden. Der Erreger 17 wird von einer Betriebs- und Auswerteschaltung 30, wobei letztere auch die Signale der Schwingungssensoren erfasst und auswertet, um einen Dichtemesswert und ggf. einen Massedurchflussmesswert zu ermitteln. Die Betriebs- und Auswerteschaltung 30 ist erfindungsgemäß ebenfalls dazu eingerichtet, Dichtefluktuationen anhand der Frequenzfluktuationen zu ermitteln und zu signalisieren.

Die Dichte $\rho$ eines Mediums kann mittels eines Dichtemessers, der einen Oszillator mit mindestens einem schwingfähige Messrohr zum Führen des Mediums aufweist, anhand einer modenspezifischen, dichteabhängigen Eigenfrequenz $f_i$ des Oszillators ermittelt werden gemäß:

$$\rho(f_i) = c_{0,i} + \frac{c_{1,i}}{f_i^2}$$

Die Koeffizienten $c_{0,i}$ und $C_{1,i}$ sind modenspezifische Koeffizienten, die vorzugsweise für jeden Messgerätetypen, bzw. jedes Messgerät zu ermitteln sind. Der Koeffizient $c_{0,i}$ wird von der Masse des das Medium führenden Messrohrs geprägt, während der Koeffizient $C_{1,i}$ von einer modenspezifischen Steifigkeit des Messrohrs abhängt. Die zeitliche Ableitung der Dichte $\frac{\partial \rho}{\partial t}$ ist damit gegeben als:

$$\frac{\partial \rho}{\partial t} = c_{1,i} \frac{-2}{f_i^{\,3}} \frac{\partial f_i}{\partial t} \; .$$

Die zeitliche Ableitung der Dichte $\frac{\partial \rho}{\partial t}$ ist ein geeignetes Maß zur Beschreibung der Dichtefluktuation. Um diesen Wert zu ermitteln, ist die beobachtete Frequenzfluktuation $\frac{\partial f_i}{\partial t}$ des schwingenden Messrohrs bzw. der schwingenden Messrohre erfindungsgemäß noch mit einem Normierungsfaktor $c_{1,i} \frac{2}{f_i^{\,3}}$ zu multiplizieren. Auf diese Weise ist die Basis für eine Bewertungsfunktion geschaffen, welche den Inhomogenitätsgrad des Mediums in Form der Dichtefluktuationen unabhängig vom jeweiligen Typ des Dichtemessers bzw. dessen Größe beschreiben kann. Die Betriebs- und Auswerteschaltung 30; eines erfindungsgemäßen Messgerätes sind in einer Ausgestaltung der Erfindung dazu eingerichtet die Dichtefluktuation auf Basis der Frequenzfluktuation mittels der oben erläuterten Normierung mit dem Kehrwert der der dritten Potenz der modenspezifischen Eigenfrequenz durchzuführen:

$$\frac{\partial \rho}{\partial t} = c_{1,i} \frac{-2}{f_i^{\,3}} \frac{\partial f_i}{\partial t} \; .$$

Der Effekt der obigen Normierung sei anhand von Daten für zwei Coriolis-Massedurchflussmessgeräte aus dem Hause der Anmelderin, nämlich einen Promass F50 und einen Promass Q50 erläutert, welche beide die Funktion eines Dichtemessgerätes aufweisen. Die beobachteten Eigenfrequenzfluktuationen $\frac{\partial f_i}{\partial t}$ unterscheiden sich bei einem wässrigen Medium mit einer Gasbeladung von 1% bzw. 2% um einen Faktor von etwa 6,6. Nach der Normierung mit dem Normierungsfaktor $c_{1,i} \frac{2}{f_i^{\,3}}$ ergibt sich daraus bei beiden Geräten etwa der gleiche Wert für die Dichtefluktuation $\frac{\partial \rho}{\partial t}$ .

Eine ähnliche Analyse der Dichtefluktuation $\frac{\partial \rho}{\partial t}$ ist in einer zweiten Ausgestaltung der Erfindung implementiert. Hierbei ist die Betriebs- und Auswerteschaltung dazu eingerichtet, die Dichtefluktuation zu ermitteln gemäß:

$$\frac{\partial \rho}{\partial t} = \frac{2(\rho - c_{0,i})}{f_i} \frac{\partial f_i}{\partial t} \; .$$

Zum Bereitstellen des Betrags der relativen Dichtefluktuation $\frac{\frac{\partial \rho}{\partial t}}{\rho}$ ist die Betriebs- und Auswerteschaltung gemäß einer dritten Ausgestaltung der Erfindung dazu eingerichtet, diesen anhand der relativen Frequenzfluktuation $\frac{\frac{\partial f_i}{\partial t}}{f_i}$ zu ermitteln gemäß:

$$\left| \frac{\frac{\partial \rho}{\partial t}}{\rho} \right| = 2 \left( 1 + \frac{|c_{0,i}|}{\rho} \right) \left| \frac{\frac{\partial f_i}{\partial t}}{f_i} \right|$$

Wenn die Dichte des Mediums an einer Messstelle nur um einige wenige Prozent um einen bekannten Wert variiert ansonsten aber vom Wertebereich bekannt ist, kann die relative Dichtefluktuation abgeschätzt werden als Funktion der relativen Frequenzfluktuation abgeschätzt werden mit:

$$\left| \frac{\frac{\partial \rho}{\partial t}}{\rho} \right| \approx a_i \left| \frac{\frac{\partial f_i}{\partial t}}{f_i} \right| ,$$

wobei $a_i$ eine messstellenspezifische bzw. medienspezifische und ggf. modenspezifische Konstante ist, sofern mehrere Moden zur Dichtemessung verwendet werden können.

Die beschriebenen Normierungen mit der dritten Potenz der Frequenz für die Dichtefluktuation bzw. mit der Frequenz selbst für die relative Dichtefluktuation sind vorteilhaft aber nicht zwingend erforderlich für die Realisierung der vorliegenden Erfindung. Im Zentrum der vorliegenden Erfindung steht die Berücksichtigung der Strömungsgeschwindigkeit bei der Interpretation von Frequenzfluktuationen die nun anhand von Fign. 2 und 3 erläutert wird.

Fig 2 zeigt schematisch den Verlauf der Frequenzfluktuationen df/dt als Funktion der Strömungsgeschwindigkeit V für ein inhomogenes Medium mit der Zusammensetzung $a_i$, welches beispielsweise eine Flüssigkeit mit einer Feststofffracht, ein Nassgas oder eine mit Gas beladene Flüssigkeit sein kann. Die Minoritätskomponente weist hierbei beispielsweise eine Konzentration von einigen wenigen Volumenprozent auf. Bei V=0 bzw. stillstehendem Medium weist das Medium im Durchflussmesser eine konstante Dichte auf. Dem entsprechend treten keine Frequenzfluktuationen auf. Mit einsetzender Strömung wird das Messgerät zeitabhängig mit veränderlichen lokal inhomogenen Verteilungen der Komponenten des Mediums beaufschlagt, die als Dichteschwankungen beobachtbar sind, beispielsweise in Form von Frequenzfluktuationen df/dt. Zunächst steigen die Frequenzfluktuationen df/dt mit steigender Geschwindigkeit an. Wenn jedoch die Geschwindigkeit weiter ansteigt geht in einen Frequenzmesswert die mittlere Dichte einer größeren Medienmenge ein, so dass lokale Dichteschwankungen an Bedeutung verlieren. Dem entsprechend werden die Frequenzfluktuationen df/dt wieder kleiner.

Fig. 3 zeigt eine topographische Darstellung, in welcher Frequenzfluktuationen df/dt über der Strömungsgeschwindigkeit und einer Minoritätskonzentration dargestellt sind. Zum Erstellen einer solchen Landkarte kann für verschiedene Minoritätsanteile $a_i$ eines bestimmten inhomogenen Mediums jeweils die die Frequenzfluktuation als Funktion der Geschwindigkeit V erfasst werden. Im vorliegenden Diagramm steigt die Minoritätskonzentration $a_i$ mit steigendem Index i an, und kann beispielsweise i Volumenprozent betragen. Nachdem eine hinreichende Datenbasis erstellt ist können die Frequenzfluktuationen df/di als Funktion der Geschwindigkeit V und der Minoritätskonzentration $a_i$ dargestellt und modelliert werden, beispielsweise in der hier gewählten topographischen Darstellung, wobei die Linien $f_j$ jeweils Punkte gleicher Frequenzfluktuationen df/dt miteinander verbinden, wobei die Fluktuation fj mit steigendem Index j zunimmt.

Im Messbetrieb kann dann einer Frequenzfluktuation df/di in Abhängigkeit von der Strömungsgeschwindigkeit V, die sich aus einer momentanen Massedurchflussrate und der aktuellen mittleren Dichte des Mediums ergibt, ein Kompositionsindex CI zugeordnet werden. So ergeben sich, wie in Fig. 3 dargestellt für die gleiche beobachtete Frequenzfluktuation fs je nach Strömungsgeschwindigkeit zwei unterschiedliche Kompositionsindices $CI_1$ und $CI_2$. Die Kompositionsindices können, je nach Fragestellung bzw. Messaufgabe einer Messstelle verschiedene Bedeutung tragen.

Einerseits kann der Kompositionsindex dem Minoritätsanteil $a_1$ entsprechen oder eine lineare Funktion des Minoritätsanteils sein. Dies kann beispielsweise dann sinnvoll sein, wenn der Minoritätsanteil $a_1$ eine zu überwachende bzw. zu regelnde Prozessvariable ist, beispielsweise der Feststoffanteil oder der Gasvolumenanteil in einer Flüssigkeit.

Andererseits kann der Kompositionsindex auch das Überschreiten einer kritischen Überwachungsgröße entsprechen, beispielsweise würden alle Frequenzfluktuationen, die einer Minoritätskonzentration unterhalb von $a_3$ entsprechen auf einen Kompositionsindex $CI_2$ abgebildet, während alle Frequenzfluktuationen, die einer Minoritätskonzentration oberhalb von as entsprechen auf einen Kompositionsindex $CI_1$ abgebildet, wobei $CI_1$ einem kritischen Zustand entspricht.

Die Kompositionsindices CI sind Medienzustandswerte im Sinne der Erfindung, die in geeigneter Weise zu erfassen, zu kommunizieren bzw. zu signalisieren sind.

In einer einfacheren Ausgestaltung der Erfindung werden als Medienzustandswerte Tupel von Frequenzfluktuationen und zugehörigen Geschwindigkeiten ausgegeben werden.

Im Zusammenhang Diskussion der Fign. 2 und 3 wurden Frequenzfluktuationen df/dt beschrieben. Selbstverständlich können diese Frequenzfluktuationen vor der Ermittlung des Medienzustandswerts mit der dritten Potenz der Schwingfrequenz normiert werden, um den Medienzustandswert auf Basis der Dichtefluktuationen zu ermitteln. Entsprechendes gilt für die oben beschriebene Normierung mit der Schwingfrequenz, um den um den Medienzustandswert auf Basis relativer Dichteschwankungen zu ermitteln. Weiterhin kann die Darstellung der in Fign. 2 und 3 anstelle über der Strömungsgeschwindigkeit V auch über der Massedurchflussrate, der Volumendurchflussrate oder der Reynoldszahl erfolgen. Die Betriebs- und Auswerteschaltung des Messgerätes ist je nach Ausgestaltung der Erfindung eingerichtet die erforderlichen Berechnungen durchzuführen.

Schließlich kann die Betriebs- und Auswerteschaltung, anders als in Fig 1 dargestellt auch mehrere, räumlich getrennte Module umfassen. So kann die Berechnung der Medienzustandswerte auch in einem abgesetzten Rechenmodul erfolgen, dem die erforderlichen Rohdaten übermittelt werden, beispielsweise drahtlos.

## Patentansprüche

1. Messgerät (100) zum Charakterisieren eines inhomogenen, fließfähigen Mediums, und zum Bestimmen der Dichte, des Massedurchflusses und/oder der Viskosität des Mediums, umfassend:

   einen Oszillator (10), der mindestens ein schwingfähiges Messrohr (14) zum Führen des Mediums aufweist, und der mindestens eine Schwingungsmode aufweist deren Eigenfrequenz von der Dichte des Mediums abhängt;
   einen Erreger (17) zum Anregen der Schwingungsmode;
   mindestens einen Schwingungssensor (18, 19) zum Erfassen von Schwingungen des Oszillators (10); und
   eine Betriebs- und Auswerteschaltung (30), die dazu eingerichtet ist, den Erreger mit einem Erregersignal zu beaufschlagen, Signale des Schwingungssensors zu erfassen, anhand der Signale des Schwingungssensors aktuelle Werte der Eigenfrequenz des Oszillators sowie Fluktuationen der Eigenfrequenz zu ermitteln, und eine Medienzustandsmeldung mit einem fluktuationsabhängigen Medienzustandswert zu generieren,

   **dadurch gekennzeichnet, dass**
   der Medienzustandswert weiterhin von einem Durchflussmesswert abhängt, der den bei den Fluktuationen herrschenden Durchfluss charakterisiert.

2. Messgerät nach Anspruch 1, wobei die Medienzustandsmeldung neben dem Medienzustandswert eine Angabe darüber enthält, in welchem Durchflussregime der Medienzustandswert ermittelt wurde.

3. Messgerät nach Anspruch 2, wobei die Angabe über das Durchflussregime, den Durchflussmesswert oder einen Werteberich des Durchflussmesswerts umfasst.

4. Messgerät nach einem der vorhergehenden Ansprüche, wobei der Medienzustandswert mit einer von dem Durchflussmesswert abhängigen Normierungsfunktion normiert ist.

5. Messgerät nach einem der vorhergehenden Ansprüche, wobei die Fluktuationen von der jeweiligen Durchflussrate abhängen, wobei der Medienzustandswert weiterhin eine Funktion des Durchflussmesswerts ist, mit welcher die Durchflussratenabhängigkeit der Fluktuationen kompensiert wird.

6. Messgerät nach einem der vorhergehenden Ansprüche, wobei der Durchflussmesswert eine Strömungsgeschwindigkeit, eine Massedurchflussrate, eine Volumendurchflussrate oder eine Reynoldszahl oder eine Bereichsangabe für die vorgenannten Größen umfasst.

7. Messgerät nach einem der vorhergehenden Ansprüche, wobei der Medienzustandswert einen Gasvolumenanteil des Mediums oder einen Wertebereich für den Gasvolumenanteil umfasst.

8. Messgerät nach einem der vorhergehenden Ansprüche, wobei der Medienzustandswert eine Funktion der Fluktuationen der Eigenfrequenz ist, wobei die Funktion weiterhin eine eigenfrequenzabhängige Normierung aufweist.

9. Messgerät nach Anspruch 8, wobei die Funktion proportional ist zur Fluktuation der Eigenfrequenz und zur dritten Potenz des Kehrwerts der Eigenfrequenz.

10. Messgerät nach Anspruch 8 oder 9, wobei die Funktion weiterhin proportional ist zu einer modalen Steifigkeit des Oszillators bei der zur Eigenfrequenz gehörenden Schwingungsmode des Oszillators.

11. Messgerät nach Anspruch 9, wobei die Funktion proportional ist zum Kehrwert der Eigenfrequenz.

12. Messgerät nach einem der vorhergehenden Ansprüche, wobei der Oszillator mindestens ein Paar von schwingfähigen Messrohren zum Führen des Mediums aufweist.

13. Messgerät nach einem der vorhergehenden Ansprüche, wobei das Messgerät zwei voneinander unabhängige Oszillatoren mit jeweils einem Paar von Messrohren aufweist, wobei die beiden Oszillatoren für eine Biegeschwingungsnutzmode jeweils unterschiedliche Nutzmodeeigenfrequenzen aufweisen.

14. Messgerät nach einem der vorhergehenden Ansprüche, wobei der Medienzustandswert einen Index, zum Klassifizieren des Mediums umfasst, insbesondere zum Klassifizieren hinsichtlich seiner Gasbeladung.

15. Messgerät nach einem der vorhergehenden Ansprüche, wobei die Betriebs- und Auswerteschaltung dazu eingerichtet, einem Dichtemesswert, einem Massedurchflussmesswert und/oder einem Viskositätsmesswert eine Bewertung zuzuordnen, die von dem Medienzustandswert abhängt, und beispielsweise auf den Grad der Inhomogenität des Mediums hinweist.

## Claims

1. A measuring device (100) for characterizing an inhomogeneous, fluid medium, and for determining the density, the mass flow, and/or the viscosity of the medium, comprising:

An oscillator (10) which has at least one measuring tube (14) that can vibrate for conducting the medium, and which has at least one vibration mode with a natural frequency that depends on the density of the medium;
An exciter (17) for initiating the vibration mode;
At least one vibration sensor (18, 19) for registering vibrations of the oscillator (10); and
An operating and evaluation circuit (30) which is configured to supply the exciter with an exciter signal, to register signals from the vibration sensor, to use the signals from the vibration sensor to determine current values of the natural frequency of the oscillator and fluctuations in the natural frequency, and to generate a media state message with a fluctuation-dependent media state value,
**characterized in that**
the media state value
continues to depend on a measured flow value which characterizes the flow occurring in the fluctuations.

2. The measuring device as claimed in claim 1, wherein alongside the media state value itself, the media state message also contains information about the flow regime in which the media state value was determined.

3. The measuring device as claimed in claim 2, wherein the information about the flow regime comprises the measured flow value or a range of measured flow values.

4. The measuring device as claimed in one of the preceding claims, wherein the media state value is standardized using a standardization function that is dependent on the measured flow value.

5. The measuring device as claimed in one of the preceding claims, wherein the fluctuations depend on the relevant flow rate, wherein the media state value remains a function of the measured flow value which is used to compensate for the dependency of the fluctuations on the flow rate.

6. The measuring device as claimed in one of the preceding claims, wherein the measured flow value comprises a flow velocity, a mass flow rate, a volumetric flow rate or a Reynolds number or an indication of the ranges for the aforementioned variables.

7. The measuring device as claimed in one of the preceding claims, wherein the media state value comprises a gas volume fraction of the medium or a range of values for the gas volume fraction.

8. The measuring device as claimed in one of the preceding claims, wherein the media state value is a function of the fluctuations in the natural frequency, wherein the function continues to have a standardization dependent on the natural frequency.

9. The measuring device as claimed in claim 8, wherein the function is proportional to the fluctuation in the natural frequency and to the cube of the reciprocal of the natural frequency.

10. The measuring device as claimed in claim 8 or 9, wherein the function continues to be proportional to a modal stiffness of the oscillator in the vibration mode of the oscillator associated with the natural frequency.

11. The measuring device as claimed in claim 9, wherein the function is proportional to the reciprocal of the natural frequency.

12. The measuring device as claimed in one of the preceding claims, wherein the oscillator has at least one pair of measuring tubes that can vibrate for conducting the medium.

13. The measuring device as claimed in one of the preceding claims, wherein the measuring device has two independent oscillators each with one pair of measuring tubes, wherein the two oscillators for a bending vibration useful mode each have different useful mode natural frequencies.

14. The measuring device as claimed in one of the preceding claims, wherein the media state value comprises an index for classifying the medium, in particular for classifying the medium in terms of its gas load.

15. The measuring device as claimed in one of the preceding claims, wherein the operating and evaluation circuit is configured to assign a rating to a measured density value, a measured mass flow value, and/or a measured viscosity value, said rating depending on the media state value and, for example, indicating the degree of inhomogeneity of the medium.

## Revendications

1. Appareil de mesure (100) destiné à caractériser un produit fluide inhomogène, et à déterminer la densité, le débit massique et/ou la viscosité du produit, lequel appareil comprend :

   un oscillateur (10), lequel oscillateur présente au moins un tube de mesure apte à vibrer (14) destiné à guider le produit, et lequel oscillateur présente au moins un mode de vibration dont la fréquence propre dépend de la densité du produit ;
   un excitateur (17) destiné à exciter le mode de vibration ;
   au moins un capteur de vibration (18, 19) destiné à détecter les vibrations de l'oscillateur (10) ; et un circuit de fonctionnement et d'évaluation (30), lequel est conçu pour appliquer un signal d'excitation à l'excitateur, pour détecter des signaux du capteur de vibrations, pour déterminer, à l'aide des signaux du capteur de vibrations, des valeurs actuelles de la fréquence propre de l'oscillateur ainsi que des fluctuations de la fréquence propre, et pour générer un message d'état du produit avec une valeur d'état du produit dépendant des fluctuations

   **caractérisé en ce que**
   la valeur d'état du produit dépend en outre d'une valeur mesurée de débit qui caractérise le débit régnant lors des fluctuations.

2. Appareil de mesure selon la revendication 1, pour lequel le message d'état du produit contient, outre la valeur d'état du produit, une indication sur le régime de débit dans lequel la valeur d'état du produit a été déterminée.

**3.** Appareil de mesure selon la revendication 2, pour lequel l'indication concernant le régime de débit comprend la valeur mesurée de débit ou une plage de valeurs de la valeur mesurée de débit.

**4.** Appareil de mesure selon l'une des revendications précédentes, pour lequel la valeur d'état du produit est normalisée par une fonction de normalisation dépendant de la valeur mesurée du débit.

**5.** Appareil de mesure selon l'une des revendications précédentes, pour lequel les fluctuations dépendent du débit respectif, la valeur d'état du produit étant en outre une fonction de la valeur mesurée du débit, avec laquelle la dépendance des fluctuations par rapport au débit est compensée.

**6.** Appareil de mesure selon l'une des revendications précédentes, pour lequel la valeur mesurée de débit comprend une vitesse d'écoulement, un débit massique, un débit volumique ou un nombre de Reynolds, ou une indication de plage pour les grandeurs susmentionnées.

**7.** Appareil de mesure selon l'une des revendications précédentes, pour lequel la valeur d'état du produit comprend une fraction volumique de gaz du produit ou une plage de valeurs pour la fraction volumique de gaz.

**8.** Appareil de mesure selon l'une des revendications précédentes, pour lequel la valeur d'état du produit est une fonction des fluctuations de la fréquence propre, la fonction comprenant en outre une normalisation dépendant de la fréquence propre.

**9.** Appareil de mesure selon la revendication 8, pour lequel la fonction est proportionnelle à la fluctuation de la fréquence propre et à la puissance 3 de l'inverse de la fréquence propre.

**10.** Appareil de mesure selon la revendication 8 ou 9, pour lequel la fonction est en outre proportionnelle à une rigidité modale de l'oscillateur pour le mode d'oscillation de l'oscillateur associé à la fréquence propre.

**11.** Appareil de mesure selon la revendication 9, pour lequel la fonction est proportionnelle à l'inverse de la fréquence propre.

**12.** Appareil de mesure selon l'une des revendications précédentes, pour lequel l'oscillateur comprend au moins une paire de tubes de mesure aptes à vibrer, destinés à guider le produit.

**13.** Appareil de mesure selon l'une des revendications précédentes, l'appareil de mesure comprenant deux oscillateurs indépendants l'un de l'autre avec respectivement une paire de tubes de mesure, les deux oscillateurs ayant chacun des fréquences propres de mode utile différentes pour un mode utile de vibration de flexion.

**14.** Appareil de mesure selon l'une des revendications précédentes, pour lequel la valeur d'état du produit comprend un indice pour classer le produit, notamment pour le classer en fonction de sa charge en gaz.

**15.** Appareil de mesure selon l'une des revendications précédentes, pour lequel le circuit de fonctionnement et d'évaluation est conçu pour associer à une valeur mesurée de densité, à une valeur mesurée de débit massique et/ou à une valeur mesurée de viscosité, une évaluation qui dépend de la valeur d'état du produit et qui est indicative, par exemple, du degré d'inhomogénéité du produit.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018112002
- US 8151653 B2